# EUROPÄISCHE PATENTANMELDUNG

(11) **EP 1 617 364 A1**
(43) Veröffentlichungstag der Anmeldung: **18.01.2006**
(21) Anmeldenummer: 05013446.9
(22) Anmeldetag: 22.06.2005
(51) Int. Cl.: G06Q 10/00

(54) **Elektronische Handelsplattform für zeitkritische Transaktionen**

(30) Priorität: 02.07.2004 DE 102004032107
(71) Anmelder: Deutsche Telekom AG, 53113 Bonn (DE)
(72) Erfinder: Unrau, Andreas, Dipl.-Phys., 53225 Bonn (DE)

(57) **Zusammenfassung**

Verfahren zur automatisierten Abwicklung eines Kaufgeschäftes vermittels einer elektronischen Handelsplattform, die als Datenbank Verwaltungs-Programm auf einem Computer (Server) realisiert ist, wobei der Server für Nutzer über ein Kommunikationsnetz zugänglich ist, an das eine Vielzahl von Endgeräten angeschlossen ist, wobei ein Anbieter seine Ware durch eine Dateneingabe vermittels eines Endgerätes zu einem Anfangspreis über die Handelsplattform anbietet, wobei ein Kunde, der vermittels eines weiteren Endgerätes Zugang zu der Handelsplattform hat, das Angebot durch eine der Handelsplattform übermittelten Dateneingabe annimmt, sofern es seiner Nachfrage entspricht,
wobei sich das Angebot auf Ware bezieht, die, wie insbesondere verderbliche Lebensmittel, bis hin zum Verfall einem kontinuierlichen Qualitätsverlust unterliegt,
wobei die Ware zum Zeitpunkt des Warenangebotes anhand ihrer Qualitätsmerkmale kategorisiert und mit einem Anfangspreis ausgezeichnet wird,
wobei der Anfangspreis mit Zustimmung des Anbieters während der Dauer des Warenangebotes automatisch gesenkt wird,
wobei der Kunde durch die Dateneingabe das Warenangebot zu dem automatisch für den Zeitpunkt der Dateneingabe bestimmten Preis annimmt, wobei durch die Annahme der Kauf zustande kommt.

## Beschreibung

Die vorliegende Erfindung betrifft ein Verfahren zur automatisierten Abwicklung eines Kaufgeschäftes vermittels einer elektronischen Handelsplattform, die als Datenbank Verwaltungs- Programm auf einem Computer (Server) realisiert ist, wobei der Server für Nutzer über ein Kommunikationsnetz zugänglich ist, an das eine Vielzahl von Endgeräten angeschlossen ist, wobei ein Anbieter seine Ware durch eine Dateneingabe vermittels eines Endgerätes zu einem Anfangspreis über die Handelsplattform anbietet, wobei ein Kunde, der vermittels eines weiteren Endgerätes Zugang zu der Handelsplattform hat, das Angebot durch eine der Handelsplattform übermittelten Dateneingabe annimmt, sofern es seiner Nachfrage entspricht. Die Erfindung betrifft zudem ein System zur Umsetzung des Verfahrens.

Derartige elektronische Marktplattformen, über die Waren einer Öffentlichkeit angeboten und verkauft werden, sind in großer Vielfalt allgemein bekannt. So bieten heutzutage eine Vielzahl von Anbietern, insbesondere Versandhäuser, ihre Produkte über das Internet an, die dann über den Computer des Kunden bestellt und direkt ins Haus geliefert werden. Bei diesen Produkten handelt es sich meist um Neuware, die sich anhand bestimmter Merkmale eindeutig kategorisieren lässt. Weiterhin sind Auktionsplattformen bekannt und höchst populär, über die eine Vielzahl sehr spezieller und mitunter einzigartiger gebrauchter Waren umgesetzt werden. Im Rahmen solcher Auktionen werden Einzelstücke innerhalb einer vorgegebenen Zeit versteigert. Neben diesen herkömmlichen "Vorwärts"-Versteigerungen sind auch sogenannte "Rückwärtsversteigerungen" bekannt, bei denen der Preis eines Artikels in einem vorgegebenen Takt solange fällt, bis ein Käufer zuschlägt. Diese Art von Auktion, bei der beispielsweise Autos verkauft werden, finden auch über das Internet statt, wobei sie wegen ihres Spielcharakters und ihres Potentiales im Hinblick auf Missbrauch rechtlich nicht unumstritten sind.

Nachteilig an den bekannten Verfahren ist, dass der Kunde die Ware wegen der räumlichen Distanz nicht in Augenschein nehmen kann und so, insbesondere bei gebrauchter Ware, über deren qualitativen Zustand getäuscht werden kann. Um den Kunden diesbezüglich zu sichern, reichen die natürlichen Regelmechanismen des Marktes, beispielsweise die Stigmatisierung eines betrügerischen Anbieters, allein nicht aus, so dass zusätzlich eine komplexe Gesetzgebung geschaffen werden musste. Das Problem liegt letztendlich auch darin, dass sich Anbieter und Kunde meist nicht mit gleichem Handlungsdruck begegnen und es daher nur selten zu einer als gerecht einzustufenden Interessenslage kommt, aus der beide Beteiligten profitieren.

Aufgabe der vorliegenden Erfindung ist es nunmehr, ein gattungsgemäßes Verfahren und ein das Verfahren umsetzendes System zu schaffen, das sich mit einfachen Mitteln kostengünstig umsetzen lässt und das trotz der diesen Verfahren eigenen Anonymität dennoch einen bedarfsgerechten und fairen Austausch von Waren ermöglicht, bei dem das Risiko für den Kunden und den Anbieter automatisch reduziert ist.

Diese Aufgabe wird durch ein Verfahren nach Anspruch 1 und das System nach Anspruch 13 gelöst. Vorteilhafte Ausgestaltungen sind in den Unteransprüchen genannt.

Ein wesentlicher Grundgedanke der Erfindung liegt darin, eine Handelsplattform zu schaffen, über die schnell verderbliche Waren, wie Lebensmittel, insbesondere Obst, Gemüse, Frischfisch oder Frischfleisch, oder auch Blumen, angeboten und zügig umgesetzt werden können, bevor der Verfall der Ware stattgefunden hat. Diese Idee wird erfindungsgemäß unter Einbeziehung zweier zentraler Faktoren umgesetzt: So ist es zum einen wichtig, die angebotenen Waren zunächst nach allgemeingültigen und den Beteiligten bekannten Standards hinsichtlich ihrer Qualitätsmerkmale zu kategorisieren, so dass der Kunde sich ein klares Bild von der Ware und von dem derzeitigen Zustand machen kann. Als Merkmale für die Kategorisierung kommen neben der Warenbezeichnung deren Handels- oder Güteklassen, der Ernte-, Fang- oder Schlacfitzeitpunkt, die Art der Lagerung, die beispielsweise anhand eines Lagerungsprotokolls nachzuweisen ist, und die Menge in Betracht. Zum Anderen wird der zu einem Startzeitpunkt ausgezeichnete Preis an den kontinuierlichen Qualitätsverlust der Ware gekoppelt, so dass sich dem Verfall nähernde Ware mit der Zeit automatisch billiger wird. Mit diesen Informationen versorgt, die der Kunde über ein Medium, insbesondere seinen über das Internet an die Handelsplattform angeschlossenen Computer, abrufen kann, beobachtet der Kunde die Preisentwicklung und willigt in dem Moment in den Kauf ein, in dem sich das Angebot mit seiner Nachfrage respektive seiner Vorstellung deckt. Über eine solche elektronische Handelsplattform kann die Verteilung leicht verderblicher Güter gewährleistet werden, die ansonsten verworfen werden müssten.

Als Beispiel für ein Produkt, das über die erfindungsgemäße Handelsplattform vertrieben werden könnte, sei frischer Spargel genannt, der sich eindeutig nach seiner Anbaugegend, nach dem Zeitpunkt des Stechens und nach seiner Handelsklasse einordnen lässt, wobei auch noch weitere Kriterien eingeführt werden können. Dabei hat frischer Spargel einen Marktpreis, der dem Anbieter und dem Kunden als Anhalt dient und der sich im Laufe einiger weniger Tage nach dem Stechen beträchtlich ändert. Über diese Zeit hinweg wird der Preis durch das System automatisch gesenkt. Durch seine manuelle oder automatische Dateneingabe gibt ein Kunde zu erkennen, dass er das derzeitige Angebot zu dem automatisch für den Zeitpunkt der Dateneingabe bestimmten Preis annimmt. Durch diese Annahme kommt ein Teil eines Kaufvertrages zustande.

Wie in dem Beispiel des Spargels, so werden alle über die Handelsplattform angebotenen Waren zum Zeitpunkt des Angebotes anhand vorher festgelegter Qualitätsmerkmale kategorisiert und mit einem Anfangspreis versehen. Dieser wird während der Dauer des Angebots mit Zustimmung des Anbieters automatisch gesenkt, wobei die interessierte Kundschaft jederzeit über den aktuellen Preis informiert ist. Stimmen Angebot und Nachfrage überein, nimmt der Kunde durch die Dateneingabe das aktuelle Angebot zu dem automatisch für den Zeitpunkt der Dateneingabe bestimmten Preis an. Dabei ist es gerade bei einer automatisierten Annahme allerdings vorteilhaft, auf Wunsch des Anbieters und/oder des Kunden eine "manuelle" Kontrolle vorzusehen. Diese kann dadurch gewährleistet werden, wenn der Kauf nach der Dateneingabe für eine vorgegebene Zeit vorbehalten bleibt, bis der Kunde eine manuelle Bestätigung durch eine weitere Dateneingabe vornimmt.

Der Vorteil der Erfindung liegt darin, dass ein zügiger Umschlag der verderblichen Waren ermöglicht wird, bei denen die Lagerhaltung problematisch ist. Gerade diese Waren müssen zeitnah abverkauft werden, damit die Verfallsdaten die durch die Natur der Ware bedingt sind, nicht überschritten werden. Da der Wert dieser Waren nach Ablauf des Verfallsdatums gegen Null geht, kann der Anbietervor großen Verlusten bewahrt werden. Die Erfindung minimiert somit das Risiko für Unternehmen, beispielsweise aus Gastronomie oder Einzelhandel insofern, als die allgegenwärtige Planungsunsicherheit ausgeglichen werden kann. Schließlich gestaltet sich eine exakte Planung des Bedarfs aufgrund des mitunter lokal stark schwankenden Käuferverhaltens schwierig. Bekanntermaßen wird immer wieder zuviel Ware geordert, die dann nicht abgesetzt werden kann. So wird auf Seiten des Verkäufers meist erst relativ spät erkannt, dass Überkapazitäten vorhanden sind. Mit den bislang bekannten Mitteln kann nicht mehr entsprechend reagiert werden, um die Ware an andere Unternehmen zu verkaufen, die ihrerseits die Möglichkeit hätten, die Ware zu vermarkten oder zu verwenden. Andererseits ist es für die am Kauf interessierten Unternehmen wichtig, schnell an die Waren zu kommen, die sie wegen der bestehenden Nachfrage kurzfristig absetzen könnten, die sie aber über den herkömmlichen Weg, beispielsweise den Großmarkt, zu dem Zeitpunkt nicht mehr bekommen, da dieser schon sämtliche Ware des Tages verteilt hat. Mit der Erfindung werden somit auf ideale Weise das aktuelle Angebot und die aktuelle Nachfrage ausgeglichen, wobei alle Beteiligten davon profitieren. Die Erfindung schafft somit eine klassische win/win Situation bei minimiertem

Risiko.

Dabei ist folgendes Szenario vorstellbar: Ein Unternehmen A erkennt, dass sein Bestand an einer bestimmten Ware bis zu deren Verfallsdatum vermittels des herkömmlichen Weges nicht mehr abgesetzt oder verbraucht werden kann. Es existiert also eine Überkapazität an Ware, die kurzfristig abgebaut werden muss. Das Unternehmen A stellt die Ware in das System und bietet sie dort an. Dabei werden die erforderlichen Angaben zu der Ware gemacht. Insbesondere werden die Menge, die Qualität, das Verfallsdatum und auch eine entsprechende Angabe über den Anbieter, wie insbesondere der Ort, genannt. Der Anbieter gibt auch den geforderten Preis ein, wobei das System vorteilhafterweise verschiedene Modelle der Preisentwicklung vorsieht, aus denen der Anbieter entweder wählen kann oder die automatisch eingestellt werden. Potentielle Kunden prüfen, inwieweit Ware, die sie benötigen, in dem System zur Verfügung steht. Ist das der Fall, wird der Kauf über das System abgeschlossen.

Es ist auch möglich, dass Kunden ihre Nachfrage auch schon zu dem Zeitpunkt in dem System anmelden, solange noch kein entsprechendes Angebot abgegeben wurde. Dazu werden neben den Angaben zum Käufer, Wünsche zur Art der Ware, zu deren Preis und zu der gewünschten Menge eingegeben. Auch Eingaben über regionale Einschränkungen und Zeitfenster für die Lieferung sind möglich. Vom Anbieter wird dann garantiert, dass die Ware zu dem geforderten Zeitpunkt verfügbar ist. Dazu ist es vorteilhaft, wenn der Versandt ebenfalls über das System initiiert wird, indem beispielsweise entsprechende Logistik-Unternehmen automatisch den Auftrag zur Abholung und Lieferung der Ware bekommen.

Die erfindungsgemäße Handelsplattform ist deswegen besonders attraktiv, da Angebot und Nachfrage unmittelbar ausgeglichen werden können und sich der Handel für die Beteiligten unkompliziert und ohne besondere Maßnahmen gestaltet. Zudem ist das System insofern flexibel, als es offen ist, eine Vielzahl von Möglichkeiten einzubinden, die den Umschlag weiter vereinfachen. Letztendlich ließe sich die Verteilung der Waren und der finanzielle Ausgleich unter den Beteiligten nahezu vollständig automatisieren. So ist es beispielsweise von Vorteil, wenn die für die Annahme des Angebotes notwendige Dateneingabe des Kunden automatisch geschieht, sobald das Warenangebot seiner Nachfrage entspricht und ein vorher vom Kunden vorgegebener Preis für die Ware erreicht ist.

Erfindungsgemäß wird die Plattform durch ein EDV-gestütztes System realisiert, über das die Transaktionen zur Vermittlung der genannten verderblichen Waren abgewickelt werden können. Dabei ist es besonders vorteilhaft, dass die gesamte Wertschöpfungskette, ausgehend vom Angebot und der Nachfrage der Ware, dem Zusammenbringen der Beteiligten, dem zustande kommen des Kaufvertrags, der Abwicklung der Transaktion und letztendlich sogar der Logistik über das System abgewickelt werden kann. Das Besondere an dem System ist auch, dass es sich gerade für kleinere Unternehmen, wie z.B. Einzelhandelsunternehmen, eignet, da auf Grund des zeitkritischen Prozesses bei solchen Transaktionen eine schnelle Verfügbarkeit der Ware gewährleistet sein muss.

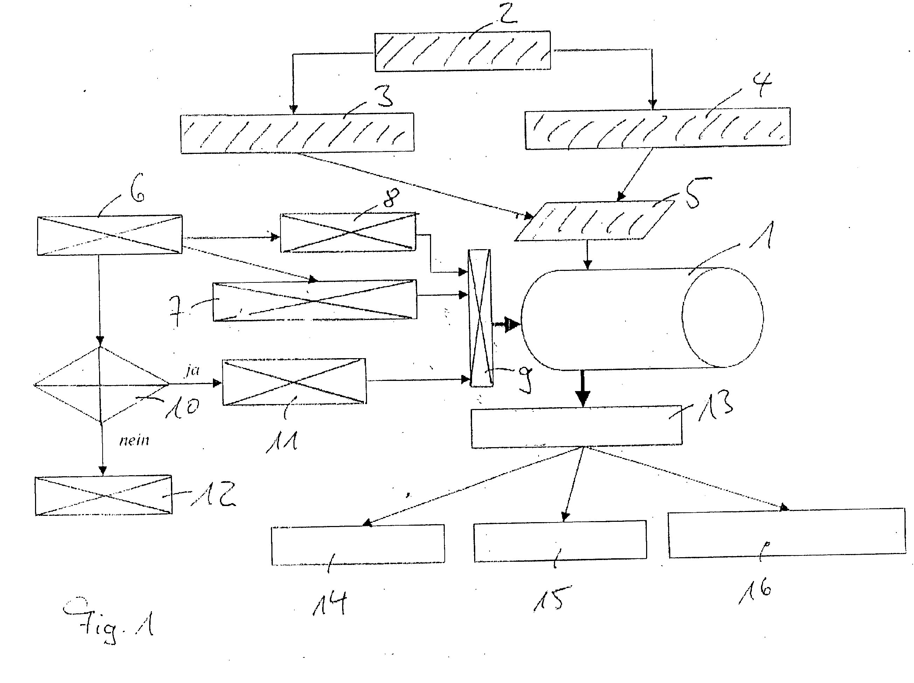

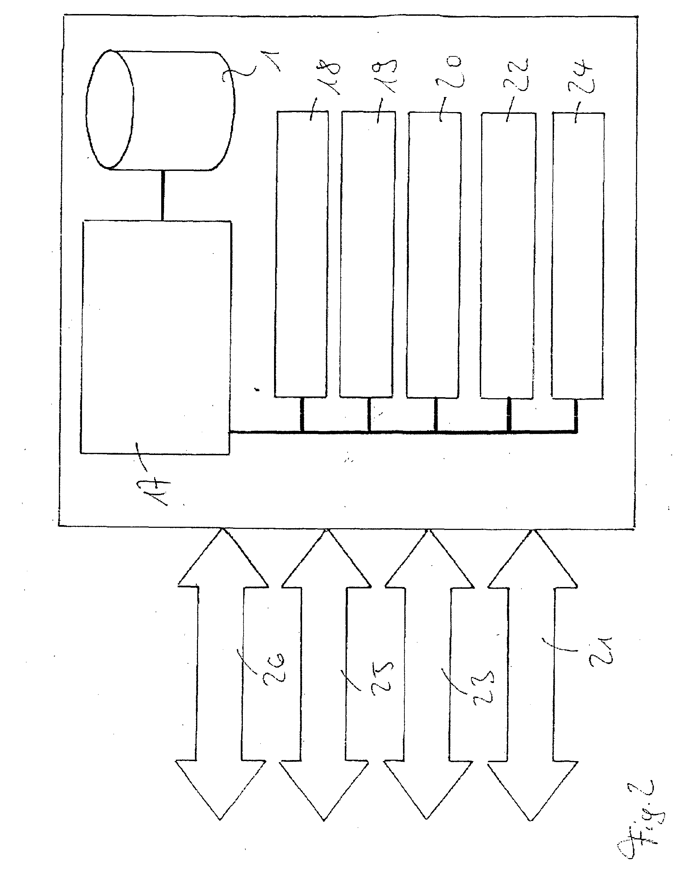

Die Erfindung wird nachfolgend anhand der Figuren 1 und 2 erläutert. Die Figuren zeigen:
- **Figur 1**: ein Schaubild des Prozesses und
- **Figur 2**: Komponenten des Servers.

In Figur 1 ist das System der elektronischen Handelsplattform anhand eines Schaubildes gezeigt. Das System weist zunächst eine Datenbank 1 auf, deren Kernstück ein zentraler Server mit Schnittstellen zu anderen Geräten ist. Neben der zentralen Architektur, bei der alle Funktionen auf einem Server realisiert werden, ist auch eine verteilte Architektur möglich, bei der die Funktionen auf verschiedene Server verteilt sind. Der Zugang zu dem System erfolgt für die Beteiligten über ein Kommunikationsnetz, insbesondere das Internet, ein Intranet ein Telephonnetz und/oder ein (virtuelles) privates Netz, an das eine Vielzahl von Nutzerendgeräten angeschlossen sind. Mehrere Beteiligte können dabei zu einer geschlossenen Nutzergruppe zusammengefasst sein, wobei ein Nutzer sowohl Anbieter (Verkäufer) als auch Kunde (Käufer) sein kann. Auch andere Beteiligte, wie Spediteure, können sich nach einer Registrierung des Systems bedienen. In der Datenbank 1 werden alle für die Abwicklung der Transaktion erforderlichen Daten eingetragen und gespeichert. Dabei sind die Datenformate vordefiniert, wobei sich die registrierten Nutzer bei der Dateneingabe entsprechender Eingabemasken bedienen.

Im vorliegenden Fall bietet ein Anbieter 2 seine Ware über das System zum Verkauf an. Die Anbieterseite ist in der Figur 1 durch schraffierte Rechtecke dargestellt. Über das Kommunikationsnetz hat der Anbieter entweder einen "manuellen" Zugang 3 zum System, den ihm sein an das Netz angeschlossener externer Computer verschafft. Es ist ihm auch möglich, einen "automatischen" Zugang 4 zu schaffen, wobei ein auf seinem Computer realisiertes Modul in Kontakt zum System steht. Dieses Modul organisiert Dateneingaben automatisch und kann beispielsweise im Lager vorhandene Ware, die verkauft werden muss, automatisch in das System stellen. So werden manuell oder automatisch Daten 5 generiert, die in der Datenbank 1 abgelegt werden. Die in der Datenbank 1 enthaltenen Daten sind über entsprechenden Endgeräte, insbesondere über dezentrale Computer der einzelnen Nutzer, für einen Kundenkreis zugänglich. Dabei kann eine Absicherung des Zugangs zur Datenbank durch eine vorherige Authorisierung des Anbieters und/oder des Kunden vorgesehen sein.

Neben dem Anbieter 2 ist es auch einem Kunden 6 möglich, auf die Datenbank 1 zuzugreifen. Auch dieser hat einen "manuellen" 7 oder "automatischen" Zugang 8 zur Datenbank 1, wobei auch er Daten 9 generieren kann, die der Datenbank 1 zugeführt werden. Im wesentlichen kann er über seinen Zugang die vom Anbieter 2 in das System gestellte Ware daraufhin kontrollieren, inwieweit sie seiner Nachfrage entspricht. Er kann aber auch seine Wünsche formulieren und als Nachfrage in das System stellen, bevor ein Angebot von einem Anbieter kommt. Die Kundenseite ist hier mit durchkreuzten Kästen dargestellt. Sobald ein Angebot mit einer Nachfrage zusammenpasst, wird automatisch der Kauf initiiert. In dem vorliegenden Beispiel geschieht die automatische Annahme unter dem Vorbehalt der manuellen Bestätigung durch den Kunden. Sobald der Kunde 6 von einem passenden Angebot erfährt, gilt es für ihn, die Kaufentscheidung 10 zu bestätigen. Fällt die Entscheidung positiv ("Ja") aus, initiiert der Kunde den Kaufauftrag 11 durch eine manuelle Dateneingabe 9. Bei negativer Entscheidung 10 ("Nein") kann die Transaktion 12 abgebrochen werden.

Sobald das System respektive der Kunde den Auftrag 11 auslöst, werden weitere Transaktionen 13 durchgeführt. So werden der Anbieter über die Funktion 14 als auch der Kunde über die Funktion 15 benachrichtigt. Die Funktionen 14 und 15 sind Benachrichtigungsfunktionen, die eine zeitnahe Benachrichtigung und eine schnelle Reaktion der am Prozess Beteiligten im Hinblick auf den speziellen Charakter der Waren ermöglicht. Das entsprechende Benachrichtigungsmodul informiert die Beteiligten sofort über Angebote und Transaktionen. Als Medien bieten sich eMail, SMS oder andere Formen der elektronischen Datenübermittlung an. Über diese Medien können für registrierte Nutzer auch Angebote eingestellt werden. Auch eine Spracherkennung lässt sich ebenso in das System implementieren.

Außerdem werden die weiteren kommerziellen Prozesse 16, wie der Versand und die Rechnungslegung, angestoßen. Als optionale Dienstleistungen kann das System über angeschlossenen Spediteure den Transport der Ware veranlassen oder den Zahlungsprozess mit Rechnungserstellung und Debitorenmanagement regeln. Das kommerzielle Management wird von einem entsprechenden Modul 24 (Figur 2) organisiert. Andere funktionale Blöcke der Software regeln Zugang und Authentifizierung der Nutzer.

Die Datenbank 1 wird von entsprechender Software gesteuert, die den Eintrag der Daten in die Datenbank 1 erlaubt. Zudem steuert sie über Plausibilitätsprüfungen die Einträge und veranlasst, dass Einträge, bei denen bestimmte Parameter, wie z.B. Verfallsdaten, die nicht mehr erfüllt sind, gelöscht werden und damit nicht mehr für Transaktionen zur Verfügung stehen. Als weitere Funktion steuert die Software die genannten Transaktionen. Wie dargelegt, können Kunde und Anbieter bestimmte Parameter, die das Zustandekommen von Transaktionen beeinflussen, wie beispielsweise regionale Einschränkungen oder die maximale Transportdauer, eingegeben. Die besondere Ausrichtung des Systems auf schnell verderbliche Güter schließt zudem besondere Funktionalitäten ein.

In Figur 2 werden Module des Systems, sowie Schnittstellen dargestellt. So ist die Datenbank 1 über ein zentrales Modul 17 zugänglich, an das weitere Module angeschlossen sind. Dabei führt das Modul 18 zunächst die Authentifizierung der Nutzer durch. Zudem ist ein Preismodul 19 vorhanden, das es dem Anbieter ermöglicht, einen geforderten Preis einzugeben und das den Preis entsprechend dem Verfall der Ware senkt. Je näher das Verfallsdatum rückt, um so stärker sinkt der Preis. Umgekehrt kann der potentielle Kunde eine Preisschwelle setzen. Ist diese unterschritten, kommt der Kauf automatisch zustande. Es ist auch möglich, einen Preisabgleich mit anderen Datenbanken, in denen akzeptierte Preise für bestimmte Produkte enthalten sind, vorzusehen. Einigen Modulen sind Ein- und/oder Ausgabemasken zugeordnet, welche die Kommunikation mit dem System ermöglichen, wobei die Masken der einzustellenden Ware angepasst und entsprechend normierte Parameter abfragen können. So könnte eine Maske den Anbieter von Spargel zur Eingabe der Menge, des Anbaugebietes und der Güteklasse zwingen.

Als weiteres ist ein Modul 20 vorhanden, das die Logistik regelt. Dabei ist ein schneller Transport der Ware zwischen dem Kunden und dem Verkäufer für das System essentiell. Der Transport ist ein wichtiger Teil des Gesamtprozesses. Das System hat daher eine Schnittstelle 21 zu elektronischen Transportbörsen. Es ist auch möglich, dass Spediteure ihre Dienstleistung mit den erforderlichen Daten, wie Preisen oder garantierten Transportdauern als Nutzer in das System einbringen. Für die Anbieter und die Kunden besteht damit die Option diese Dienstleistung mit Abschluss der Transaktion automatisch mit zu ordern. Die erforderliche kommerzielle Abwicklung wird ebenfalls vom System übernommen.

Zudem ist ein Warenschlüssel-Modul 22 vorgesehen, über das die angebotenen Waren vermittels industrieüblich standardisierter Warenschlüssel oder Bar Code Kodierungen eingegeben werden können. Das ermöglicht einerseits eine präzise standardisierte Beschreibung der Waren und andererseits die Koppelung mit Lagerhaltungs- und Erfassungssystemen. Über diesen Code können potentielle Kunden ihr Interesse an einer bestimmten Ware anmelden. Stellt ein Anbieter dann entsprechende Ware zum passenden Preis ein, erfolgt automatisch der Kauf über die gesamte Ware oder einen Teil der Ware, je nach dem; wie groß die angebotene oder abgefragte Menge ist.

Um die Abläufe weitgehend zu automatisieren und um Zeit zu gewinnen, kann eine Schnittstelle 23 zu Lagerverwaltungssystemen implementiert sein. Bei dieser Schnittstelle ist eine Einstellung von Schwellwerten möglich. Das Einstellen von Ware oder das Ordern von Ware erfolgt dann automatisch über eine Funktion im System, falls der eingestellte Wert über- oder unterschritten wird. Über die Schnittstellen 25 und 26 haben Kunden und Anbieter Zugang zu dem System.

## Patentansprüche

1. Verfahren zur automatisierten Abwicklung eines Kaufgeschäftes vermittels einer elektronischen Handelsplattform, die als Datenbank Verwaltungs-Programm auf einem Computer (Server) realisiert ist, wobei der Server für Nutzer über ein Kommunikationsnetz zugänglich ist, an das eine Vielzahl von Endgeräten angeschlossen ist, wobei ein Anbieter seine Ware durch eine Dateneingabe vermittels eines Endgerätes zu einem Anfangspreis über die Handelsplattform anbietet, wobei ein Kunde, der vermittels eines weiteren Endgerätes Zugang zu der Handelsplattform hat, das Angebot durch eine der Handelsplattform übermittelten Dateneingabe annimmt, sofern es seiner Nachfrage entspricht,
**dadurch gekennzeichnet,**
**dass** sich das Angebot auf Ware bezieht, die, wie insbesondere verderbliche Lebensmittel, bis hin zum Verfall einem kontinuierlichen Qualitätsverlust unterliegt,
**dass** die Ware zum Zeitpunkt des Warenangebotes anhand ihrer Qualitätsmerkmale kategorisiert und mit einem Anfangspreis ausgezeichnet wird,
**dass** der Anfangspreis mit Zustimmung des Anbieters während der Dauer des Warenangebotes automatisch gesenkt wird,
**dass** der Kunde durch die Dateneingabe das Warenangebot zu dem automatisch für den Zeitpunkt der Dateneingabe bestimmten Preis annimmt, wobei durch die Annahme der Kauf zustande kommt.

2. Verfahren nach Anspruch 1,
**dadurch gekennzeichnet, dass** die für die Annahme des Angebotes notwendige Dateneingabe automatisch geschieht, wenn das Warenangebot der Nachfrage entspricht und ein vorher vom Kunden vorgegebener Preis für die Ware erreicht ist.

3. Verfahren nach Anspruch 2,
**dadurch gekennzeichnet, dass** der Kauf nach der Dateneingabe für eine vorgegebene Zeit vorbehalten bleibt, bis der Kunde eine manuelle Bestätigung durch eine weitere Dateneingabe vornimmt.

4. Verfahren nach einem der vorherigen Ansprüche,
**dadurch gekennzeichnet, dass** über die Handelsplattform Ware vertrieben wird, deren Verfall im Zeitraum einer Woche, insbesondere innerhalb eines Tages, stattfindet.

5. Verfahren nach einem der vorherigen Ansprüche,
**dadurch gekennzeichnet, dass** die Qualitätsmerkmale einer dem Anbieter und dem Kunden bekannten und akzeptierten Normierung unterliegen.

6. Verfahren nach einem der vorherigen Ansprüche,
**dadurch gekennzeichnet, dass** das Warenangebot nach dem Verfall der Ware automatisch aus der Handelsplattform genommen wird, wobei der Anbieter von der Herausnahme informiert wird.

7. Verfahren nach einem der vorherigen Ansprüche,
**dadurch gekennzeichnet, dass** der Kunde der Handelsplattform eine Nachfrage übermittelt und diese solange im System verbleibt, bis ein ihr entsprechendes Angebot eingestellt wird oder bis in der Nachfrage definierte Zeitlimits überschritten sind.

8. Verfahren nach einem der vorherigen Ansprüche,
**dadurch gekennzeichnet, dass** ein Warenangebot und/oder eine Nachfrage Daten zum Beteiligten, zur Art und den Qualitätsmerkmalen der Ware, zu deren Preis, zur angebotenen oder erbetenen Menge und zum Zeitrahmen enthalten.

9. Verfahren nach einem der vorherigen Ansprüche,
**dadurch gekennzeichnet, dass** die Auslieferung der Ware nach dem Zustandekommen des Kaufes automatisch veranlasst wird.

10. Verfahren nach einem der vorherigen Ansprüche,
**dadurch gekennzeichnet, dass** die Erstellung und Versendung der Rechnung nach dem Zustandekommen des Kaufes automatisch veranlasst wird, wobei die Rechnung in einer Buchhaltung aufgenommen wird.

11. Verfahren nach einem der vorherigen Ansprüche,
**dadurch gekennzeichnet, dass** den Nutzern Eingabemasken vorgegeben werden, über die Daten betreffend die angebotene oder nachgefragte Ware definiert eingegeben werden.

12. Verfahren nach einem der vorherigen Ansprüche,
**dadurch gekennzeichnet, dass** unterschiedliche Modelle der Preisentwicklung vorgesehen sind, mit denen die Preissenkung automatisch vorgenommen wird.

13. System zur Umsetzung des Verfahrens nach einem der vorherigen Ansprüche aufweisend ein Computersystem, das einen zentralen Server aufweist, auf dem die elektronische Handelsplattform in Form eines zugänglichen Datenbank Verwaltungs-Programms realisiert ist, wobei das Computersystem eine Vielzahl von Endgeräten aufweist, die über ein Kommunikationsnetz mit dem Server verbunden sind, wobei Nutzer über die Endgeräte Zugang zu der Handelsplattform haben, wobei ein erstes Modul vorhanden ist, das einem Anbieter das Einstellen einer Ware in die Handelsplattform in Verbindung mit einem Anfangspreis ermöglicht, wobei ein zweites Modul vorhanden ist, das einem an der Ware interessierten Kunden eine Eingabe über ein Endgerät ermöglicht, mit der er das Angebot,zu einem bestimmten Preis annimmt,
**dadurch gekennzeichnet,**
**dass** das erste Modul eine Eingabemasken aufweist, über die eine Ware eingebbar ist, die, wie insbesondere verderbliche Lebensmittel, bis hin zum Verfall einem kontinuierlichen Qualitätsverlust unterliegt, wobei im Rahmen der Maske Qualitätsmerkmale der Ware und der Anfangspreis vorgebbar sind, und
**dass** ein weiteres Modul vorhanden ist, das den Anfangspreis mit Zustimmung des Anbieters während der Dauer des Warenangebotes automatisch senkt, wobei der jeweils aktuelle Preis über die Endgeräte ausgegeben wird.
